# EUROPEAN PATENT SPECIFICATION

(11) **EP 1 972 531 B1**
(45) Date of publication and mention of the grant of the patent: **27.05.2009**
(21) Application number: 07120602.3
(22) Date of filing: 13.11.2007
(51) Int. Cl.: B62J 1/08, B62J 1/26

(54) **Bicycle saddle**
Fahrradsattel
Selle de bicyclette

(30) Priority: 20.03.2007 CN 200720002383 U
(43) Date of publication of application: 24.09.2008
(73) Proprietor: Chuang, Louis, Ta Lon Road Taichung (TW)
(72) Inventor: Chuang, Louis, Ta Lon Road Taichung (TW)
(74) Representative: Viering, Jentschura & Partner

(56) References cited:
- DE-U1-0202006 009 04
- US-A- 6 106 059
- US-A1- 2004 004 375
- US-A1- 2007 176 472
- US-B1- 6 666 507

## Description

### Background of the Invention

The present invention relates to a bicycle saddle, and more particularly, to a saddle that effectively supports a rider's external genital and thereby reduces the pressure placed on the perineum as defined in the preamble of claims 1 and 10, as shown for example in DE-U-20 2006 009 040.

Bicycle saddles, for many years, have been causing discomfort to the genital areas of the bicycle riders.

An article entitled "Serious Riders, Your Bicycle Seat May Affect Your Love Life" by Sandra Blakeslee on October 4, 2005, describes that cyclists, particularly men, should be careful which bicycle seats they choose. It says today's ergonomic saddles have splits in the back or holes in the center to relieve pressure on the perineum. But this makes matters worse: the ergonomic saddles have smaller surface areas, so the rider's weight presses harder on less saddle, Dr. Schrader said. The perineum may not escape injury because its arteries run laterally and they are not directly over the cutouts. The arteries can come under more pressure when they come in contact with the cutout's edges. Additionally, thick gels on saddles can also increase pressure to the perineum, the studies found, because the material can migrate and form clumps in all wrong places.

The present invention is, therefore, intended to obviate or at least alleviate the problems encountered in the prior art.

### Summary of the Invention

Accordingly, it is an objective of the present invention to provide a bicycle saddle that provides a comfortable seating to a rider and effectively reduce the pressure acting on the rider's perineum.

The bicycle saddle comprises a frame including an upper side on which being mounted a first and a second paddings and an under side on which being mounted a suspension rail for mounting the bicycle saddle on a bicycle. The frame further includes a compartment defined between the first and second paddings. An elastic element is received in the compartment and includes side edges which from edges of the bicycle saddle. A cover snugly fitted over the first and second paddings and the elastic element includes two spaces, whereby when a rider's pelvis bears on the bicycle saddle, the sides edges of the elastic element can extend outward of the spaces respectively for reducing pressure against the rider's pelvis.

Other objectives, advantages, and features of the invention will become more apparent from the following detailed description when taken in conjunction with the accompanying drawings.

### Brief Description of the Drawings

Fig. 1 is a perspective view of a bicycle saddle in accordance with a first embodiment of the present invention.
Fig. 2 is an exploded perspective view of the bicycle saddle.
Fig. 3 is a cross-sectional view taken along line 3-3 of Fig. 1.

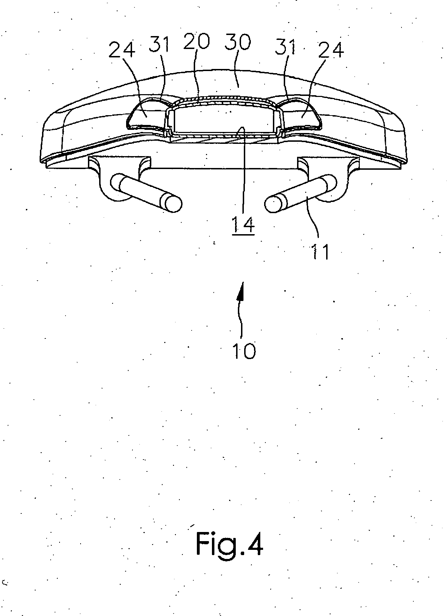

Fig. 4 is a cross-sectional view taken along line 4-4 of Fig. 1.

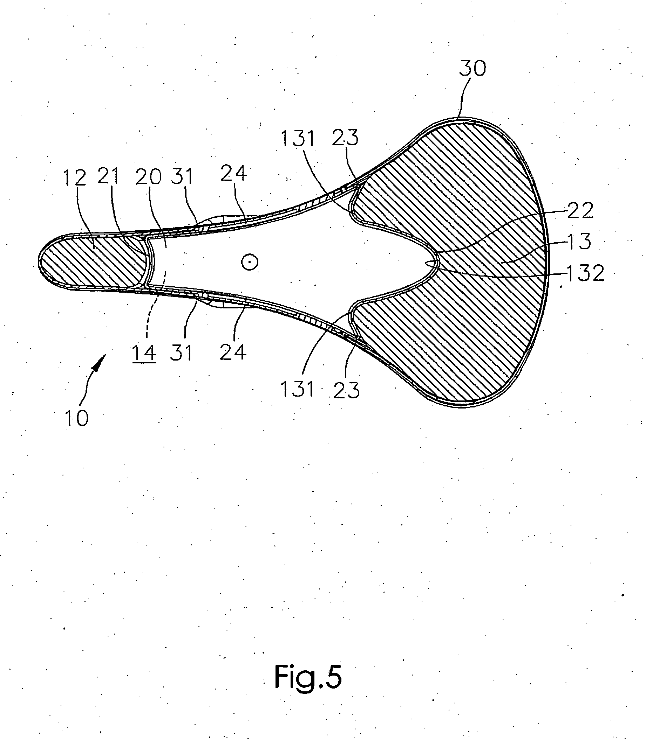

Fig. 5 is a cross-sectional view taken along line 5-5 of Fig. 3.
Fig. 6 shows a rider's pelvis bears on the bicycle saddle, with the bicycle saddle deforming elastically to provide a cushion for the rider.

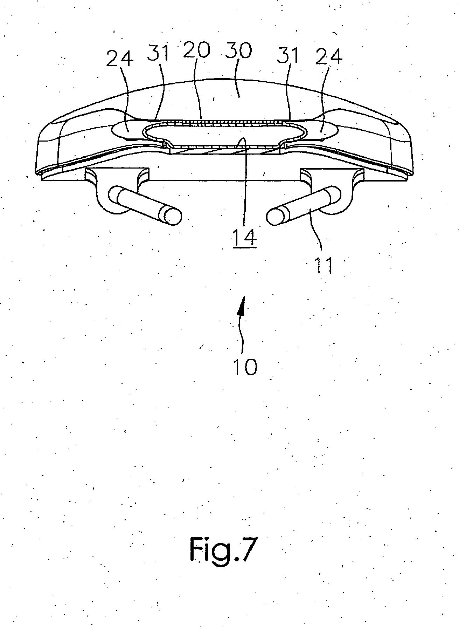

Fig. 7 is a rear view of the bicycle saddle.
Fig. 8 is similar to Fig. 5, but with the bicycle saddle deforming elastically.
Fig. 9 is an exploded view of a bicycle saddle in accordance with a second embodiment of the present invention.
Fig. 10 is a side view of the bicycle saddle of the second embodiment.
Fig. 11 is a top view of the bicycle saddle of the second embodiment.
Fig. 12 shows a rider's pelvis bears on the bicycle saddle of the second embodiment, with the bicycle saddle deforming elastically to provide a cushion for the rider.
Fig. 13 is similar to Fig. 11, but with the bicycle saddle deforming elastically.
Fig. 14 is an exploded view of a bicycle saddle in accordance with a third embodiment of the present invention.
Fig. 15 is a rear view of the bicycle saddle of the third embodiment.
Fig. 16 is an exploded view of a bicycle saddle in accordance with a third embodiment of the present invention.
Fig. 17 is a rear view of the bicycle saddle of the fourth embodiment.
Fig. 18 is an exploded view of a bicycle saddle in accordance with a fifth embodiment of the present invention.
Fig. 19 is an exploded view of a bicycle saddle in accordance with a sixth embodiment of the present invention.

### Detailed Description of the Preferred Embodiment

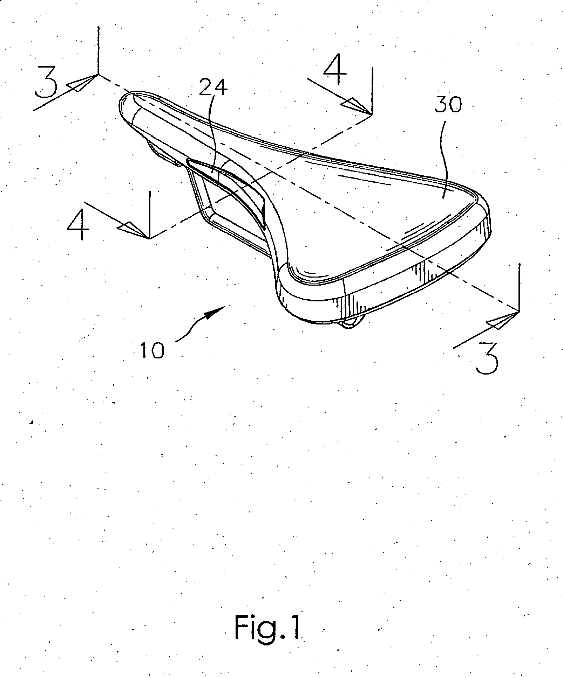

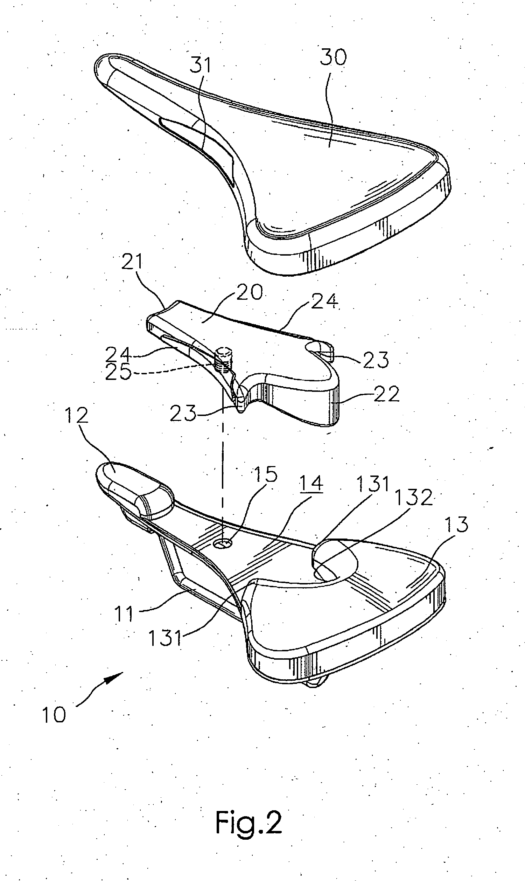

Referring to Figs. 1 and 2, a bicycle saddle in accordance with a first embodiment of the present invention comprises a frame 10, an elastic element 20 and a cover 30. The frame 10 includes an upper side on which a first padding 12 and a second padding 13 rests and an under side to which being fixed a suspension rail 11. The suspension rail 11 is made from a piece of metal wire, bent into a complex shape and is used for mounting the bicycle saddle on a bicycle. The first and second paddings 12, 13 are disposed in a spaced relation with a compartment 14 defined therebetween for receiving the elastic element 20, whereby the elastic element 20 is adapted to be secured between the first and second paddings 12, 13.

The frame 10 includes a through hole 15 extending through the upper and under sides thereof and in communication with the compartment 14. The through hole 15 into which an air valve 25 is adapted to insert. The air valve 25 is attached to the elastic element 20 and can be used to connect to a pumping device (not shown) for modifying the cushioning property that the elastic element 20 provides.

As also best seen from Fig. 2, the second padding 13 includes a leading end portion having two first curved portions 131 and a second curved portion 132, two gradually tapered out side portions, and a trailing end portion. The side and trailing end portions includes edges which forms a portion of an edge of the bicycle saddle. Further, the first padding 12 includes an edge which forms a portion of an edge of the bicycle saddle.

The elastic element 20 includes a leading end portion 21, a trailing end portion 22 and two side edges (not numbered) extending therebetween. The leading end portion 21 is complemently located against the first padding 12 on a portion which does not form an edge of the bicycle saddle. The trailing end portion 22 is complemently located against the second curved portion 132 of the second padding 13. The side edges form a portion of an edge of the bicycle saddle. Additionally, in between each side edge and the trailing end portion 22, there is an extension 23. The extension 23 is complemently located against the first curved portion 131 on a portion and includes an edge that forms a portion of an edge of the bicycle saddle. Further, each side edge includes a protuberance 24 formed thereof respectively.

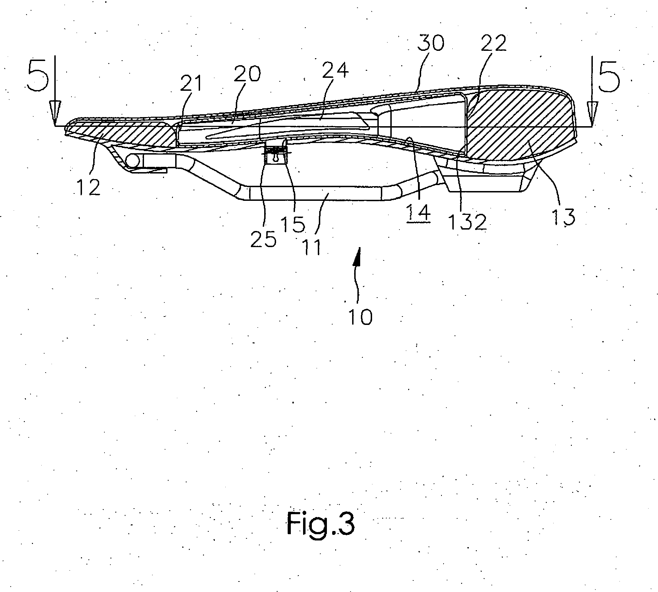

Referring to Fig. 3, the cover 30 is snugly fitted over the first and second paddings 12, 13 and the elastic element 20. The cover 30 completely covers the first and second paddings 12, 13 and the elastic element 20 and includes two spaces 31 corresponding to the positions of the protuberances 24 respectively such that each protuberance 24 is receivable in each space 31.

Preferably, the space 31 is a hole and has a shape the same as that of the protuberance 24.

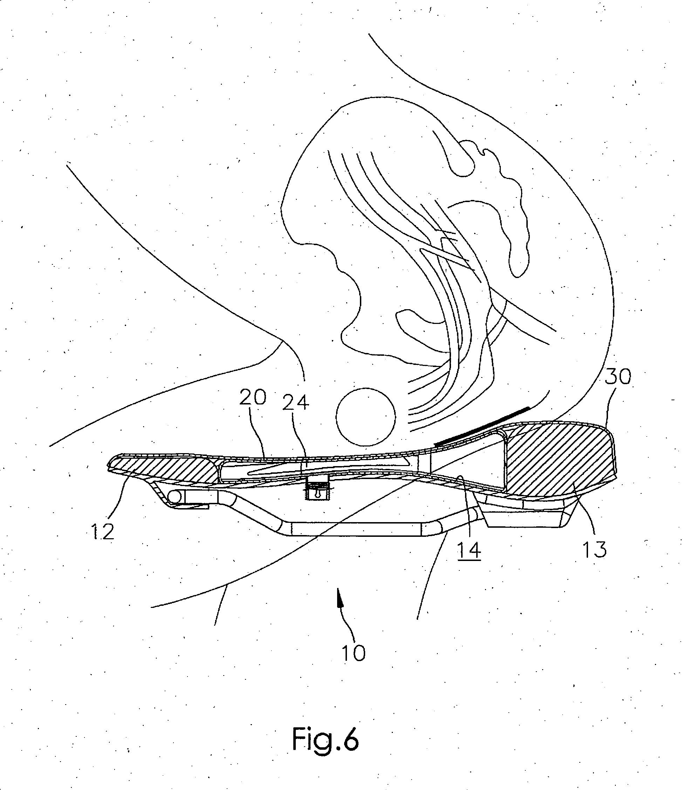

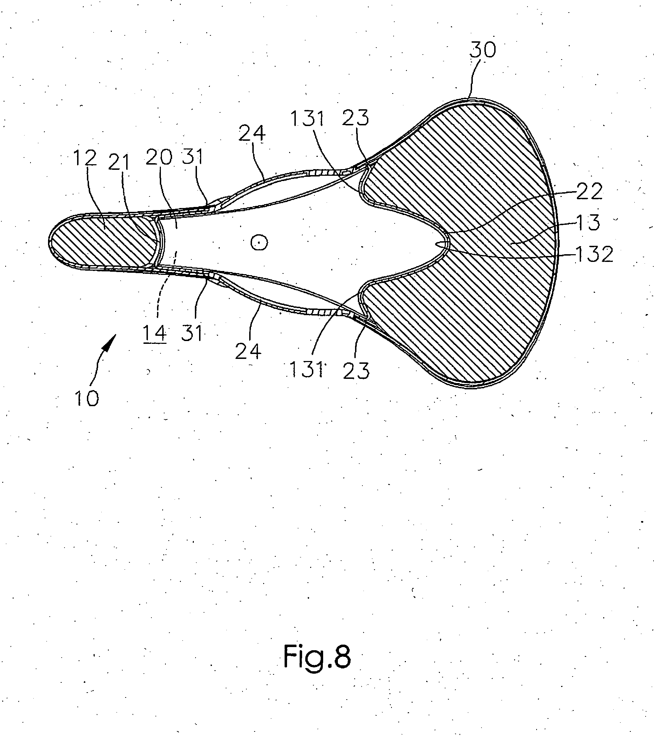

Referring to Fig. 8 in conjunction with Fig. 6, when a rider's pelvis bears on the bicycle saddle, the protuberance 24 will extend outward from the space 24, which effectively reduces the pressure acting against the rider.

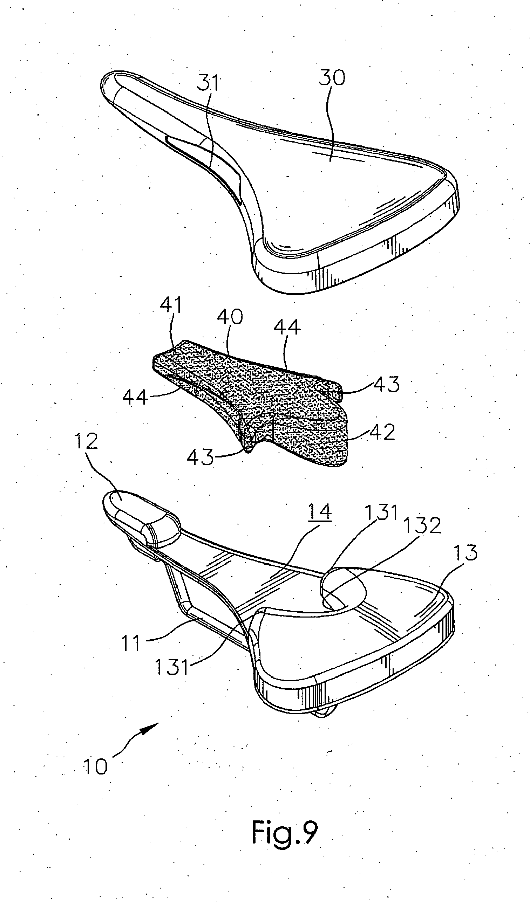

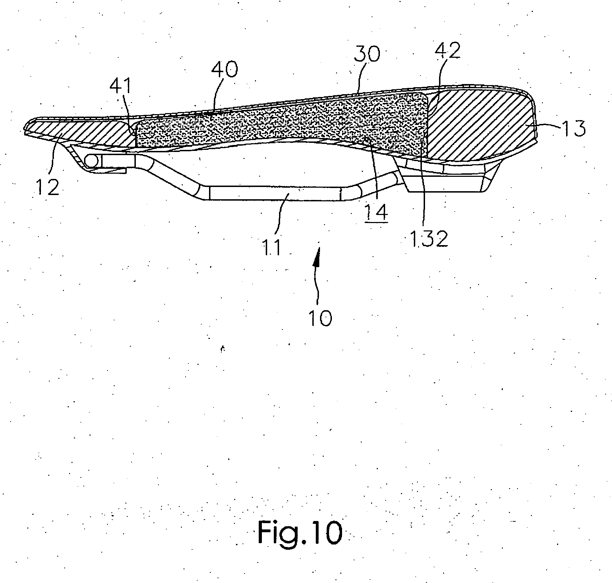

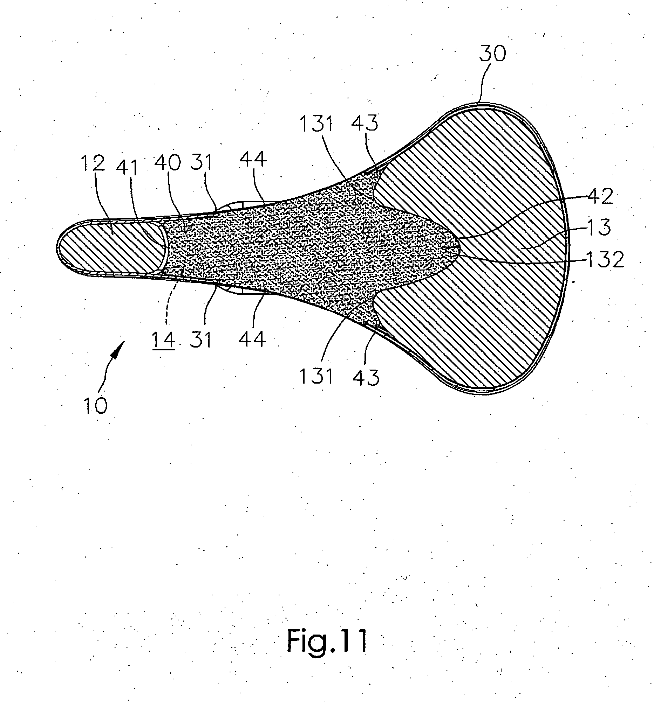

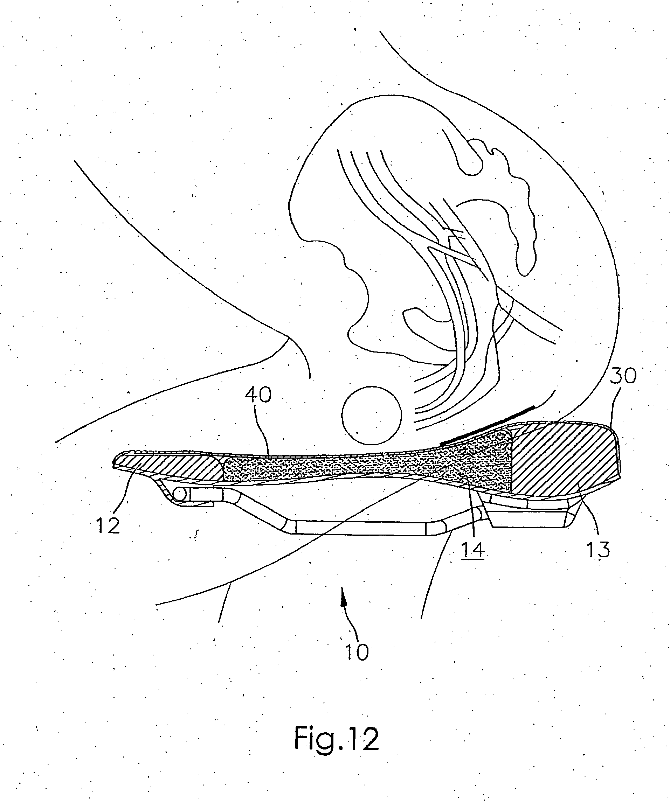

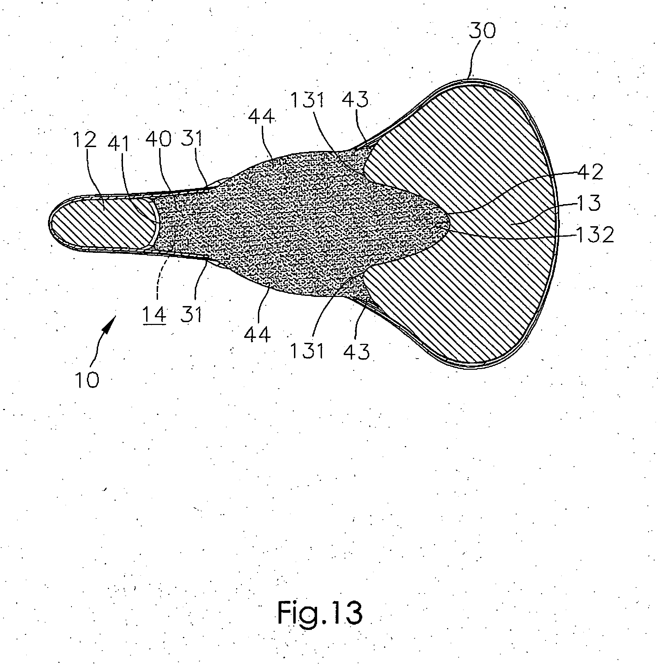

Figs. 9 to 13 show a second embodiment of a bicycle saddle in accordance with the present invention. The bicycle saddle is similar to the prior embodiment, except that the elastic element 20 is substituted with an elastic element 40. The elastic element 40 includes a leading end portion 41 located against the first padding 12, a trailing end portion 42 located against the second curved portion 132, two side edges (not numbered) extending between the leading and trailing end portions 41, 42 and an extension 43 extending between the side edge and the trailing end portion 42. The elastic element 40 further has two protuberances 44 formed on two side edges respectively, with the protuberance 44 being received in the spaces 31 of the cover 30 respectively. As best seen in Fig. 13, the protuberances 44 are expandable outward of the space 31.

Preferably, the elastic element 40 is made from gel material, such as silica gel, or forming material which has a good cushioning property.

Also, in the second embodiment, the through hole 15 disposed on the frame 10 is omitted. The elastic element does not have an air valve 25.

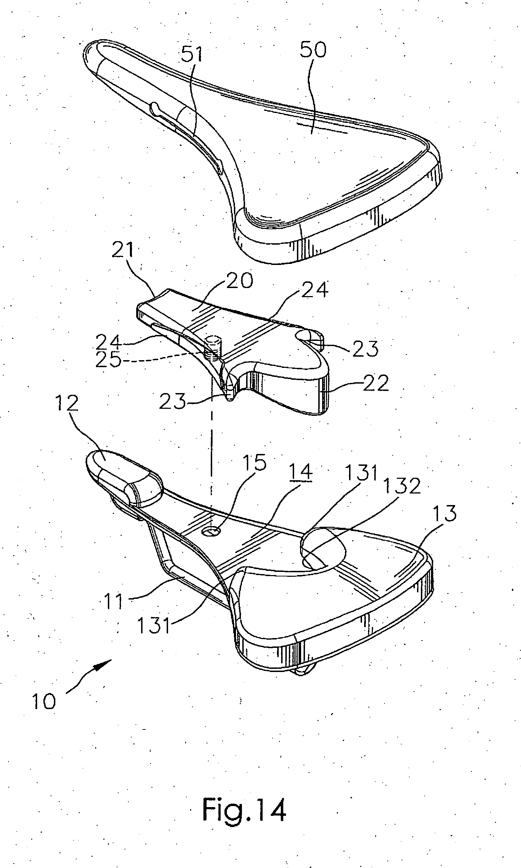

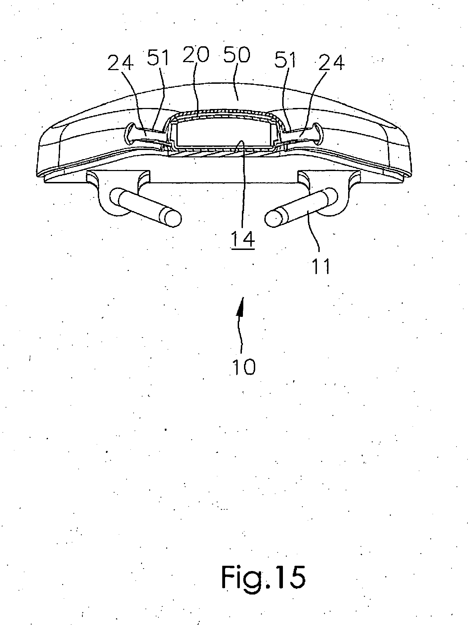

Figs. 14 and 15 show a third embodiment of a bicycle saddle in accordance with the present invention. The bicycle saddle is similar to the first embodiment, except that the cover 30 is substituted with a cover 50. The cover 50 includes two spaces 51 which allow the respective protuberances 24 to extend outward therefrom.

Preferably, the space 51 is a hole and has a shape different to that of the protuberance 24. The space 51 includes a first circular area at a distal end, a second circular area at a proximal end, and a linear area formed between the first and second circular areas.

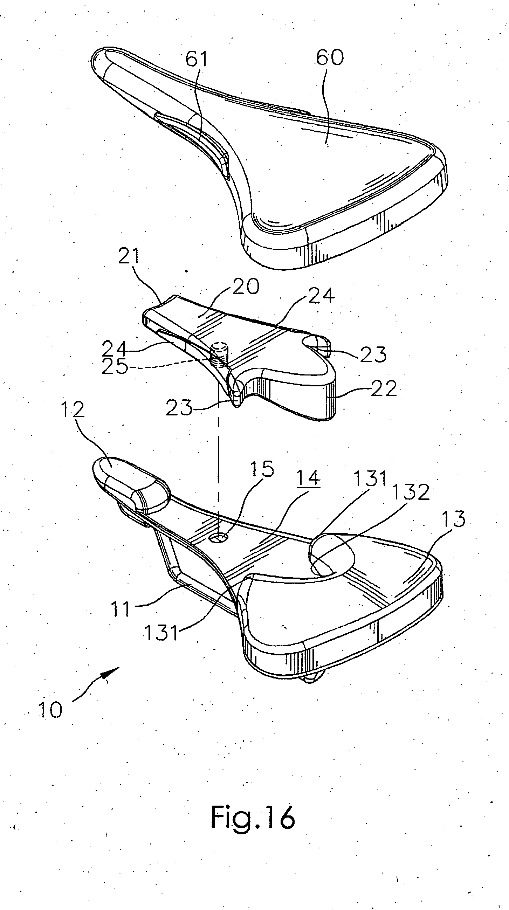

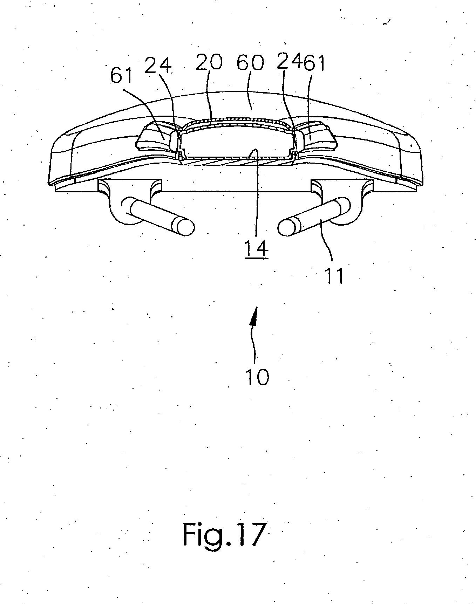

Figs 16 and 17 show a fourth embodiment of a bicycle saddle in accordance with the present invention. The bicycle saddle is similar to the first embodiment, except that the cover 30 is substituted with a cover 60. The cover 60 includes two spaces 61 which allow the respective protuberances 24 to extend outward therefrom.

Preferably, the space 61 is defined in a portion of the cover 60 which bulges outwards therefrom and is located corresponding to the protuberance 24.

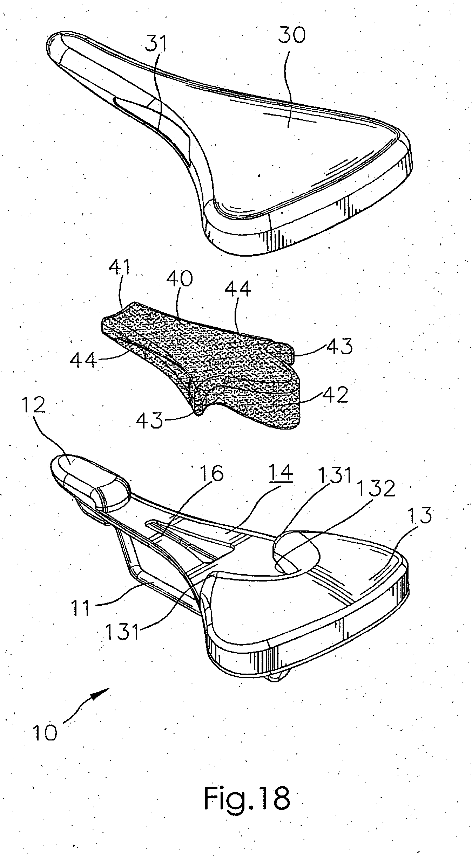

Fig. 18 shows a fifth embodiment of a bicycle saddle in accordance with the present invention. The bicycle saddle is similar to the second embodiment except that the frame 10 further has a wedge-shaped cutout 16 extending through the upper and under sides thereof and in communication with the compartment 14. The cutout 16 serves to allow extension of a portion of the elastic element 40 therethrough.

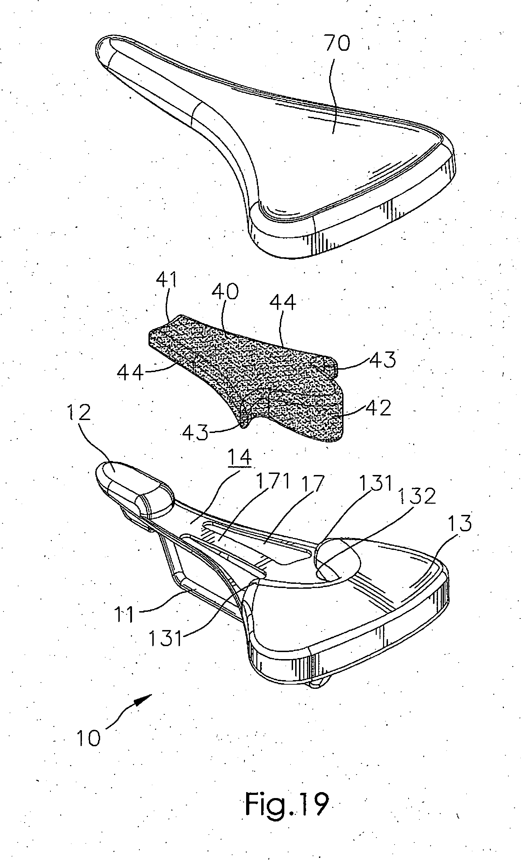

Fig. 19 shows a sixth embodiment of a bicycle saddle in accordance with the present invention. The bicycle saddle is similar to the fifth embodiment, except that the cover 30 is substituted with a cover 70. Also, the cutout 16 is substituted with two slots 17, with the slot 17 being mirroredly oriented with respect to a rib 171.

## Claims

1. A bicycle saddle comprising:
a frame (10) including an upper side on which being mounted a first padding and a second padding (12,13) and an under side on which being mounted a suspension rail (11) for mounting the bicycle saddle on a bicycle, with the first and second paddings (12, 13) including edges which form edges of the bicycle saddle, with the frame (10) further including a compartment (14) defined between the first and second paddings (12, 13);
an elastic element (20, 40) received in the compartment (14), with the elastic element (20, 40) including side edges which from edges of the bicycle saddle; with the edges extending- between the edges of the first and second paddings (12, 13),
said bicycle saddle being **characterised in that**
a cover (30, 50, 60) is snugly fitted over the first and second paddings (12, 13) and the elastic element (20), with the cover (30) including two spaces (31, 51, 61); and
whereby when a rider's pelvis bears on the bicycle saddle, the sides edges of the elastic element (20, 40) can extend outward of the spaces (31, 51, 61) respectively for reducing pressure against the rider's pelvis.

2. The bicycle saddle as claimed in claim 1 wherein the elastic element (20, 40) comprises two protuberances (24) formed on the side edges thereof respectively; with each protuberances (24) received in the respective space (31, 51, 61), whereby when a rider's pelvis bears on the bicycle saddle, the protuberances (24) can extend outward of the spaces (31, 51, 61) respectively for reducing pressure against the rider's pelvis.

3. The bicycle saddle as claimed in claim 2 wherein the space (31, 51, 61) has a shape the same as that of the protuberance (24).

4. The bicycle saddle as claimed in claim 1 wherein the space (51) has a shape having a first circular area at a distal end, a second circular area at a proximal end, and a linear area formed between the first and second circular areas.

5. The bicycle saddle as claimed in claim 1 wherein the space (61) is defined in a portion of the cover (60) which bulges outwards therefrom.

6. The bicycle saddle as claimed in claim 1 wherein the frame (10) comprises a through hole (15), and wherein the elastic element (20) comprises an air valve (25) attached thereto for modifying the cushioning property of the plastic element (20), and wherein the air valve (25) is insertable into the through hole (15).

7. The bicycle saddle as claimed in claim 1 wherein the elastic element (40) is made from gel material.

8. The bicycle saddle as claimed in claim 1 wherein the elastic element (40) is made of forming material.

9. The bicycle saddle as claimed in claim 1 wherein the frame (10) comprises a cutout (16) in communication with the compartment (14), with the cutout (16) allowing the elastic element (40) to extend outward wherefrom.

10. A bicycle saddle comprising:
a frame (10) including an upper side on which being mounted a first padding and a second padding (12, 13) and an under side on which being mounted a suspension rail (11) for mounting the bicycle saddle on a bicycle, with the first and second paddings (12, 13) including edges which form edges of the bicycle saddle, with the frame (10) further including a compartment (14) defined between the first and second paddings (12, 13),
an elastic element (40) received in the compartment (14), with the elastic element (40) including side edges which from edges of the bicycle saddle; with the edges extending between the edges of the first and second paddings (12, 13),
said bicycle saddle being **characterised in that** the frame further includes at least two slots (17);
a over (70) is snugly fitted over the first and second paddings (12, 13) and the elastic element (40); and
whereby when a rider's pelvis bears on the bicycle saddle, the sides edges of the elastic element (20, 40) can extend outward of the at least two slots (17) for reducing pressure against the rider's pelvis.

11. The bicycle saddle as claimed in claim 10 wherein the frame (10) comprises a rib (171) defined separating the slots (17).

## Patentansprüche

1. Fahrradsattel, aufweisend:
einen Rahmen (10), der aufweist: eine Oberseite, an der eine erste Polsterung und eine zweite Polsterung (12, 13) montiert sind, und eine Unterseite, an der eine Aufhängungsschiene (11) zum Montieren des Fahrradsattels an einem Fahrrad montiert ist, wobei die erste und die zweite Polsterung (12, 13) Ränder aufweisen, die Ränder des Fahrradsattels bilden, wobei der Rahmen (10) ferner eine Kammer (14) aufweist, die zwischen dem ersten und dem zweiten Polster (12, 13) definiert ist,
ein elastisches Element (20, 40), das in der Kammer (14) aufgenommen ist, wobei das elastische Element (20, 40) Seitenränder aufweist, die Ränder des Fahrradsattels bilden, wobei sich die Ränder zwischen den Rändern der ersten und der zweiten Polsterung (12, 13) erstrecken,
wobei der Fahrradsattel **dadurch gekennzeichnet ist, dass**:
eine Abdeckung (30, 50, 60) genau über die erste und die zweite Polsterung (12, 13) und das elastische Element (20) gepasst ist, wobei die Abdeckung (30) zwei Räume (31, 51, 61) aufweist, und
wobei, wenn das Becken eines Fahrers auf den Fahrradsattel drückt, die Seitenränder des elastischen Elements (20, 40) sich von den Räumen (31, 51, 61) jeweils nach außen erstrecken können, um den Druck gegen das Becken des Fahrers zu verringern.

2. Fahrradsattel gemäß Anspruch 1, wobei das elastische Element (20, 40) zwei Ausstülpungen (24) aufweist, die jeweils an den Seitenrändern desselben ausgebildet sind, wobei jede Ausstülpung (24) in dem jeweiligen Raum (31, 51, 61) aufgenommen ist, wobei, wenn das Becken eines Fahrers auf den Fahrradsattel drückt, die Ausstülpungen (24) sich jeweils von den Räumen (31, 51, 61) nach außen erstrecken können, um den Druck gegen das Becken des Fahrers zu verringern.

3. Fahrradsattel gemäß Anspruch 2, wobei der Raum (31, 51, 61) eine Form aufweist, die dieselbe wie die der Ausstülpung (24) ist.

4. Fahrradsattel gemäß Anspruch 1, wobei der Raum (51) eine Form aufweist, die einen ersten kreisförmigen Bereich an einem distalen Ende, einen zweiten kreisförmigen Bereich an einem proximalen Ende und einen linearen Bereich aufweist, der zwischen dem ersten und dem zweiten kreisförmigen Bereich ausgebildet ist.

5. Fahrradsattel gemäß Anspruch 1, wobei der Raum (61) in einem Abschnitt der Abdeckung (60) definiert ist, der sich von dort nach außen wölbt.

6. Fahrradsattel gemäß Anspruch 1, wobei der Rahmen (10) ein Durchgangsloch (15) aufweist, und wobei das elastische Element (20) ein Luftventil (25) aufweist, das daran angebracht ist, um die Polsterungs-Eigenschaft des elastischen Elements (20) zu modifizieren, und wobei das Luftventil (25) in das Durchgangsloch (15) einsetzbar ist.

7. Fahrradsattel gemäß Anspruch 1, wobei das elastische Element (40) aus Gel-Material hergestellt ist.

8. Fahrradsattel gemäß Anspruch 1, wobei das elastische Element (40) aus Formwerkstoff hergestellt ist.

9. Fahrradsattel gemäß Anspruch 1, wobei der Rahmen (10) einen Ausschnitt (16) aufweist, der mit der Kammer (14) in Verbindung ist, wobei der Ausschnitt (16) ermöglicht, dass sich das elastische Element (40) von dort aus nach außen erstreckt.

10. Fahrradsattel, aufweisend:
einen Rahmen (10), der aufweist: eine Oberseite, an der eine erste Polsterung und eine zweite Polsterung (12, 13) montiert sind, und eine Unterseite, an der eine Aufhängungsschiene (11) zum Montieren des Fahrradsattels an einem Fahrrad montiert ist, wobei die erste und die zweite Polsterung (12, 13) Ränder aufweisen, die Ränder des Fahrradsattels bilden, wobei der Rahmen (10) ferner eine Kammer (14) aufweist, die zwischen der ersten und der zweiten Polsterung (12, 13) definiert ist,
ein elastisches Element (40), das in der Kammer (14) aufgenommen ist, wobei das elastische Element (40) Seitenränder aufweist, die Ränder des Fahrradsattels bilden, wobei sich die Ränder zwischen den Rändern der ersten und der zweiten Polsterung (12, 13) erstrecken,
wobei der Fahrradsattel **dadurch gekennzeichnet ist, dass**:
der Rahmen ferner mindestens zwei Schlitze (17) aufweist,
eine Abdeckung (70) genau über die erste und die zweite Polsterung (12, 13) und das elastische Element (40) gepasst ist, und
wobei, wenn das Becken eines Fahrers auf den Fahrradsattel drückt, die Seitenränder des elastischen Elements (20, 40) sich von den mindestens zwei Schlitzen (17) aus nach außen erstrecken können, um den Druck gegen das Becken des Fahrers zu verringern.

11. Fahrradsattel gemäß Anspruch 10, wobei der Rahmen (10) eine Rippe (171) aufweist, die zum Trennen der Schlitze (17) definiert ist.

## Revendications

1. Selle de bicyclette comprenant :
un châssis (10) comprenant un côté supérieur sur lequel est monté un premier rembourrage et un second rembourrage (12, 13) et un côté inférieur sur lequel est monté un rail de suspension (11) pour monter la selle de bicyclette sur une bicyclette, avec les premier et second rembourrages (12, 13) qui comprennent des bords qui forment des bords de la selle de bicyclette, avec le châssis (10) qui comprend en outre un compartiment (14) défini entre les premier et second rembourrages (12, 13) ;
un élément élastique (20, 40) reçu dans le compartiment (14), avec l'élément élastique (20, 40) qui comprend des bords latéraux qui forment des bords de la selle de bicyclette ; avec les bords qui s'étendent entre les bords des premier et second rembourrages (12, 13) ;
ladite selle de bicyclette étant **caractérisée en ce que** :
un revêtement (30, 50, 60) est parfaitement ajusté sur les premier et second rembourrages (12, 13) et l'élément élastique (20), avec le revêtement (30) qui comprend deux espaces (31, 51, 61) ; et
moyennant quoi, lorsque le bassin d'un cycliste s'appuie sur la selle de bicyclette, les bords latéraux de l'élément élastique (20, 40) peuvent s'étendre vers l'extérieur des espaces (31, 51, 61) respectivement pour réduire la pression contre le bassin du cycliste.

2. Selle de bicyclette selon la revendication 1, dans laquelle l'élément élastique (20, 40) comprend deux protubérances (24) formées sur ses côtés latéraux respectivement, avec chaque protubérance (24) qui est reçue dans l'espace (31, 51, 61) respectif, moyennant quoi lorsque le bassin d'un cycliste s'appuie sur la selle de bicyclette, les protubérances (24) peuvent s'étendre vers l'extérieur des espaces (31, 51, 61) respectivement pour réduire la pression contre le bassin du cycliste.

3. Selle de bicyclette selon la revendication 2, dans laquelle l'espace (31, 51, 61) a la même forme que celui de la protubérance (24).

4. Selle de bicyclette selon la revendication 1, dans laquelle l'espace (51) a une forme ayant une première zone circulaire au niveau d'une extrémité distale, une seconde zone circulaire au niveau d'une extrémité proximale, et une zone linéaire formée entre les première et seconde zones circulaires.

5. Selle de bicyclette selon la revendication 1, dans laquelle l'espace (61) est défini dans une partie du revêtement (60) qui fait saillie vers l'extérieur à partir de celle-ci.

6. Selle de bicyclette selon la revendication 1, dans laquelle le châssis (10) comprend un trou de passage (15) et dans laquelle l'élément élastique (20) comprend un obturateur d'air (25) fixé à celui-ci pour modifier la propriété d'amortissement de l'élément élastique (20) et dans laquelle l'obturateur d'air (25) peut être inséré dans le trou de passage (15).

7. Selle de bicyclette selon la revendication 1, dans laquelle l'élément élastique (40) est réalisé à partir d'un matériau en gel.

8. Selle de bicyclette selon la revendication 1, dans laquelle l'élément élastique (40) est réalisé à partir d'un matériau de formage.

9. Selle de bicyclette selon la revendication 1, dans laquelle le châssis (10) comprend une découpe (16) en communication avec le compartiment (14), avec la découpe (16) qui permet à l'élément élastique (40) de s'étendre vers l'extérieur à partir de celui-ci.

10. Selle de bicyclette comprenant :
un châssis (10) comprenant un côté supérieur sur lequel est monté un premier rembourrage et un second rembourrage (12, 13) et un côté inférieur sur lequel est monté un rail de suspension (11) pour monter la selle de bicyclette sur une bicyclette, avec les premier et second rembourrages (12, 13) qui comprennent des bords qui forment des bords de la selle de bicyclette, avec le châssis (10) qui comprend en outre un compartiment (14) défini entre les premier et second rembourrages (12, 13),
un élément élastique (40) reçu dans le compartiment (14), avec l'élément élastique (40) qui comprend des bords latéraux qui forment des bords de la selle de bicyclette ; avec les bords qui s'étendent entre les bords des premier et second rembourrages (12, 13),
ladite selle de bicyclette étant **caractérisée en ce que** le châssis comprend en outre au moins deux fentes (17),
un revêtement (70) ajusté parfaitement sur les premier et second rembourrages (12, 13) et l'élément élastique (40) ; et
moyennant quoi lorsque le bassin d'un cycliste s'appuie sur la selle de bicyclette, les bords latéraux de l'élément élastique (20, 40) peuvent s'étendre vers l'extérieur des au moins deux fentes (17) pour réduire la pression contre le bassin du cycliste.

11. Selle de bicyclette selon la revendication 10, dans laquelle le châssis (10) comprend une nervure (171) définie en séparant les deux fentes (17).
